# FASCICULE DE BREVET EUROPEEN

(11) **EP 2 160 001 B1**
(45) Date de publication et mention de la délivrance du brevet: **08.03.2017**
(21) Numéro de dépôt: 09168789.7
(22) Date de dépôt: 27.08.2009
(51) Int. Cl.: H04M 1/725

(54) **Procédé d'échange de données entre deux entités électroniques**
Verfahren zum Datenaustausch zwischen zwei elektronischen Geräten
Method for exchanging data between two electronic entities

(30) Priorité: 28.08.2008 FR 0855771
(43) Date de publication de la demande: 03.03.2010
(73) Titulaire: Oberthur Technologies, 92700 Colombes (FR)
(72) Inventeur: Bertin, Marc, 78720 La Celle les Bordes (FR)
(74) Mandataire: Santarelli

(56) Documents cités:
- EP-A- 1 347 623
- EP-A- 1 705 899
- WO-A-2006/115842
- WO-A-2007/121791
- WO-A2-2007/125223
- US-A1- 2004 171 375
- US-A1- 2004 203 944
- ANONYMOUS: "Public Key Infrastructureand Applications", INTERNET CITATION, 6 September 2004 (2004-09-06), pages 1-6, XP002534271, Retrieved from the Internet: URL:http://netsec.iseca.org/materials/pres entations/PKI_Applications.ppt [retrieved on 2009-06-25]
- ANONYMOUS: "Index of /materials/presentations", INTERNET CITATION, 6 September 2004 (2004-09-06), page 1, XP002534272, Retrieved from the Internet: URL:http://netsec.iseca.org/materials/pres entations/ [retrieved on 2009-06-25]

## Description

La présente invention concerne un procédé d'échange de données entre deux entités électroniques.

Dans le cadre de l'échange de données entre deux entités électroniques (ces données pouvant être représentées sous forme de signaux électriques au sein de ces entités électroniques, par exemple au sein de mémoires portées par ces entités électroniques), il a notamment été proposé de mettre en oeuvre des communications à courte portée (ou communications en champ proche si l'on traduit littéralement l'expression *"Near Field Communication"* utilisée sous forme abrégée NFC), comme décrit dans la demande de brevet WO 2007/121 791. On entend en général par courte portée une portée inférieure à 1 m, par exemple une portée de l'ordre de 50 cm, voire de 20 cm.

On utilise fréquemment, dans le but d'obtenir de telles communications à courte portée, la technologie RFID qui consiste à téléalimenter au moyen d'un lecteur un circuit électronique (porté par exemple par une étiquette, ou *"tag",* mais éventuellement aussi par tout autre objet comme par exemple un téléphone portable) qui peut dès lors communiquer avec le lecteur et lui transmettre des données destinées notamment (dans les utilisations les plus classiques de cette technologie) à identifier le produit ou la personne porteur ou porteuse de l'étiquette.

La limitation de l'interaction entre le lecteur et le circuit électronique au champ proche (en pratique magnétique) généré par le lecteur, qui pouvait au départ sembler problématique, apparaît au contraire comme un avantage de cette technologie puisque la communication est initiée du fait du rapprochement du circuit électronique et du lecteur et découle donc, sauf exception, d'un acte volontaire du porteur du circuit électronique.

La demande de brevet WO 2006/115 842 décrit par exemple une utilisation de ce type.

A l'heure actuelle, chaque circuit électronique conçu pour fonctionner selon la technologie RFID est conçue dans un but (c'est-à-dire en vue d'un service) particulier et ne détient dans ce cadre que les données relatives au service concerné (par exemple le code associé au compte de l'utilisateur dans le document précité WO 2006/115 842). Dans le cas où le circuit électronique est porté par un téléphone, les données relatives au service sont ainsi par exemple mémorisées au sein d'une mémoire du téléphone. Cette solution manque toutefois de souplesse et oblige par exemple un utilisateur à obtenir par avance une pluralité d'étiquettes configurées chacune pour fonctionner avec chaque service dont il veut bénéficier. Il est en effet impossible de manière générale d'accéder aux services pour lesquels le circuit électronique n'est pas configuré.

Le document EP 1,347,623 décrit une méthode permettant la communication d'un terminal mobile avec un accessoire connecté à celui-ci.

Afin d'améliorer cet état de fait, l'invention propose un procédé d'échange de données entre une première entité électronique et une seconde entité électronique selon la revendication 1.

On prévoit ainsi la mise en place automatique (avec contrôle éventuel par l'utilisateur) d'un processus de mémorisation d'une application qui permettra d'accéder à des fonctionnalités associées à la seconde entité électronique (lecteur dans les exemples proposés plus loin) bien que non prévues à l'origine au sein de la première entité électronique (objet portable).

L'étape d'initiation d'une communication comprend par exemple en pratique les étapes suivantes :
- téléalimentation de la première entité électronique par la seconde entité électronique ;
- émission d'un message d'établissement de communication de la première entité électronique vers la seconde entité électronique.

On peut prévoir par ailleurs les étapes suivantes mises en oeuvre en conséquence de l'initiation et préalables à la transmission de l'application :
- affichage sur la première entité électronique d'une information signalant la transmission ;
- attente d'une validation ;
- transmission de l'application en cas de validation.

On peut également prévoir une étape de préparation par la première entité électronique d'une requête de chargement de ladite application, auquel cas la mise en oeuvre de l'étape de préparation peut être conditionnée par la réception d'une autorisation d'un utilisateur.

Les deux solutions qui précèdent permettent à l'utilisateur de garder le contrôle sur la mémorisation éventuelle de l'application malgré le lancement automatique du processus.

L'application obtenue par le processus de chargement est par exemple utilisée au cours d'échanges entre la première entité électronique et la seconde entité électronique.

Dans ce cadre, on peut mettre en oeuvre les étapes suivantes :
- exécution de l'application par la première entité électronique afin de déterminer une réponse ;
- émission de la réponse par la première entité électronique à destination de la seconde entité électronique.

La transmission de l'application et l'émission de la réponse sont toutes deux réalisées dans les exemples décrits ici par communication entre des moyens de communication courte portée équipant respectivement les première et seconde entités électroniques, ce qui constitue une mise en oeuvre particulièrement avantageuse.

En variante, on pourrait toutefois prévoir que la transmission de l'application soit réalisée par communication entre des interfaces sans fil (*i.e.* sans contact) haut débit (en anglais *"high throughput wireless interfaces"*) équipant respectivement les première et seconde entités électroniques, telles que des interfaces WUSB ou BLUETOOTH. Ces interfaces sont en général distinctes de l'interface courte portée, ici NFC.

L'application est ainsi échangée rapidement entre les entités électroniques.

Dans ce contexte, l'application est relative à la seconde entité électronique (lecteur dans les exemples qui suivent) puisqu'elle participe à la mise en oeuvre d'échanges entre les deux entités électroniques. L'application pourrait toutefois en variante n'avoir aucun lien avec ces échanges ; à ce titre, il pourrait par exemple s'agir d'une application dont l'exécution s'effectue de manière autonome sur la première entité électronique, comme dans le cas d'un jeu.

La première entité électronique est par exemple une entité électronique portable (ou de poche), tel qu'un téléphone portable ou un support d'informations portable (type *"clé USB*") et la communication une communication sans fil courte portée.

D'autres caractéristiques et avantages de l'invention apparaîtront mieux à la lumière de la description qui suit, faite en référence aux dessins annexés dans lesquels :
- la figure 1 représente un contexte possible pour la mise en oeuvre de l'invention ;
- la figure 2 représente le déroulement d'échanges entre les dispositifs de la figure 1 selon un premier exemple de mise en oeuvre de l'invention ;
- la figure 3 représente le déroulement de tels échanges dans un second exemple de mise en oeuvre de l'invention.

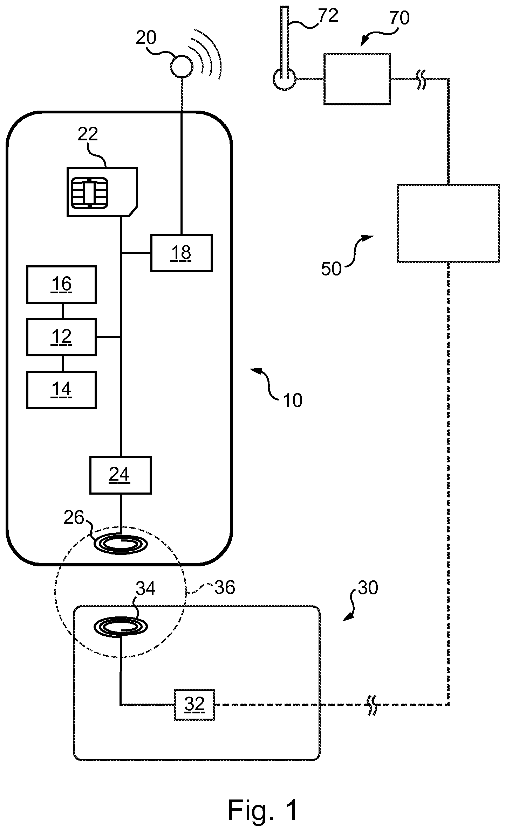

La figure 1 représente un exemple de contexte dans lequel l'invention peut être mise en oeuvre.

Un tel contexte comprend notamment un objet portable 10 (ici un téléphone portable) et un lecteur 30.

Le téléphone portable 10 et le lecteur 30 peuvent échanger des données à travers des moyens de communication courte portée (par exemple de type NFC).

Ces moyens de communication courte portée comprennent notamment un module NFC 24 coopérant (par exemple à travers un bus) avec un microprocesseur 12 du téléphone portable et relié à une antenne NFC 26 également portée par le téléphone portable 10.

Le lecteur 30 comprend également une antenne 34 parcourue par un courant sous la commande d'un module de commande 32 de manière à générer un champ magnétique 36 permettant d'alimenter et de communiquer avec des objets situés à proximité du lecteur 30 (en général sur une zone s'étendant à moins d'un mètre du lecteur, par exemple à moins d'environ 20 cm de celui-ci, la portée étant en pratique de 1 cm à 10 cm avec les technologies couramment utilisées aujourd'hui).

Comme déjà indiqué, le téléphone portable 10 comprend un microprocesseur 12 apte à gérer les différentes fonctions du téléphone portable 10, notamment l'interface avec l'utilisateur du téléphone portable 10 (au moyen par exemple d'un clavier et d'un écran non représentés). Dans ce but notamment, une mémoire morte 16 et une mémoire vive 14 sont associées au microprocesseur 12.

La mémoire morte 16 mémorise notamment des séquences d'instructions destinées à être exécutées par le microprocesseur 12 afin de mettre en oeuvre des procédés au sein du téléphone portable 10, notamment les procédés proposés par l'invention et décrits ci-après.

La mémoire vive 14 permet de mémoriser des paramètres ou instructions nécessaires au déroulement des procédés susmentionnés.

On remarque en outre que l'on peut prévoir, en plus ou en remplacement de l'une des mémoires 14, 16, une mémoire non volatile réinscriptible afin de mémoriser certaines des données ou instructions mentionnées ci-dessus.

Le téléphone portable 10 comprend également un module de lecture de carte à microcircuit recevant (de manière amovible) une carte à microcircuit, l'ensemble formé par ces deux éléments étant représentés de manière schématique en figure 1 sous la référence 22. Le module de lecture de carte 22 est relié au microprocesseur 12, par exemple par l'intermédiaire du bus déjà mentionné.

Le téléphone portable 10 comprend enfin un module de télécommunications cellulaires 18 apte à échanger des données (pouvant représenter par exemple la voie d'un interlocuteur, mais pouvant également être des données ou instructions à destination par exemple du microprocesseur 12) avec une station de base 70 d'un réseau de téléphonie cellulaire (à travers notamment une antenne équipant le téléphone portable 10 et une antenne 72 de la station de base).

Un serveur 50 mémorise notamment des applications destinées au téléphone portable 10 dans le cadre de ses échanges avec le lecteur 30 comme il sera expliqué dans la suite. Selon le mode de réalisation considéré, ce serveur 50 est relié (par exemple au moyen de connexions filaires, éventuellement à travers le réseau Internet) au lecteur 30 ou à la station de base 70 (et éventuellement en pratique à ces deux éléments).

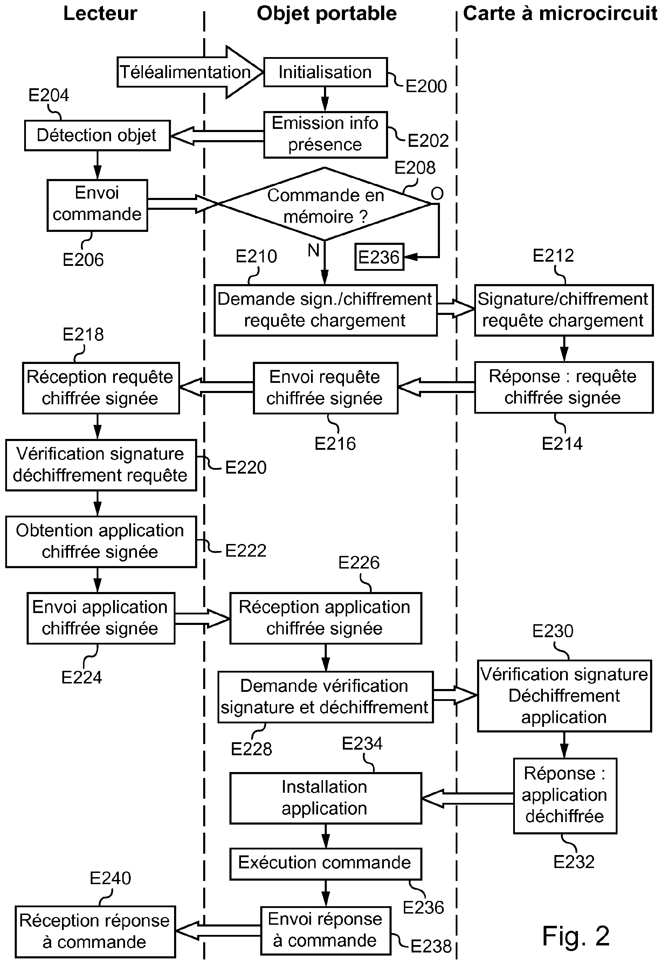

On décrit à présent en référence à la figure 2 un premier exemple d'un procédé d'échanges de données entre les différents éléments décrits ci-dessus conforme aux enseignements de l'invention.

Ce procédé est mis en oeuvre suite au rapprochement de l'objet portable 10 (comme déjà indiqué, ici un téléphone portable) du lecteur 30 (ici à moins de 20 cm comme déjà indiqué), ce qui correspond normalement à un souhait de la part de l'utilisateur du téléphone portable 10 d'utiliser des fonctionnalités associées à ce lecteur 30.

Du fait du rapprochement du téléphone 10 et du lecteur 30, le téléphone 10 (et en particulier son antenne NFC 26) entre dans le champ magnétique 36 généré par le lecteur 30, ce qui provoque la télé-alimentation du module 24 et par conséquent son initialisation à l'étape E200.

On remarque qu'en variante, le module NFC 24 équipant le téléphone portable 10 peut être alimenté par le téléphone portable 10 (auquel cas on ne profite pas de la télé-alimentation par le lecteur 30) mais être réinitialisé (étape E200) dès que l'antenne 26 entre dans le champ électromagnétique 26 du lecteur 30.

Le module NFC 24 initie alors une communication avec le lecteur 30, par exemple en émettant à l'étape E202 une information indiquant sa présence dans le champ 36 du lecteur 30. On peut prévoir par exemple que la communication s'initie conformément à ce qui décrit la norme ISO 14443.

Le lecteur 30 détecte ainsi à l'étape E204 l'objet (ici téléphone) portable 10 et émet par conséquent une commande à destination de celui-ci à l'étape E206. La commande est un élément de la mise en oeuvre de la fonctionnalité recherchée par l'utilisateur lorsqu'il approche le téléphone 10 du lecteur 30 comme mentionné ci-dessus. Il s'agit par exemple d'une commande APDU selon la norme ISO7816. En variante, la commande peut ne pas participer en elle-même à la fonctionnalité recherchée mais comprendre en tant que paramètre l'application associée à la fonctionnalité recherchée.

Le téléphone reçoit la commande à travers la liaison NFC : la commande transite à travers le module NFC 24 et atteint le microprocesseur 12 destinataire de celle-ci.

Le microprocesseur 12 vérifie alors à l'étape E208 si le code (par exemple exécutable ou interprétable, c'est-à-dire l'application) permettant la mise en oeuvre de cette commande (ou une partie de cette commande, par exemple un sous-programme) est mémorisé dans l'une des mémoires 14, 16 (ou éventuellement dans une mémoire de la carte à microcircuit 22). Le code (c'est-à-dire l'application) est une suite d'une pluralité d'instructions indépendantes (au mois trois en pratique), mémorisée par exemple sous forme exécutable ou interprétable, voir sous forme de programme source à compiler ; il s'agit par exemple d'applications formulées en langage Javacard, Javascript, Java, assembleur, C++.

Cette vérification est par exemple réalisée par consultation d'une table qui contient, pour chaque commande envisageable, un indicateur de la présence de l'application associé à cette commande dans la mémoire du téléphone portable 10 et, en cas de présence de cette application, son adresse de mémorisation.

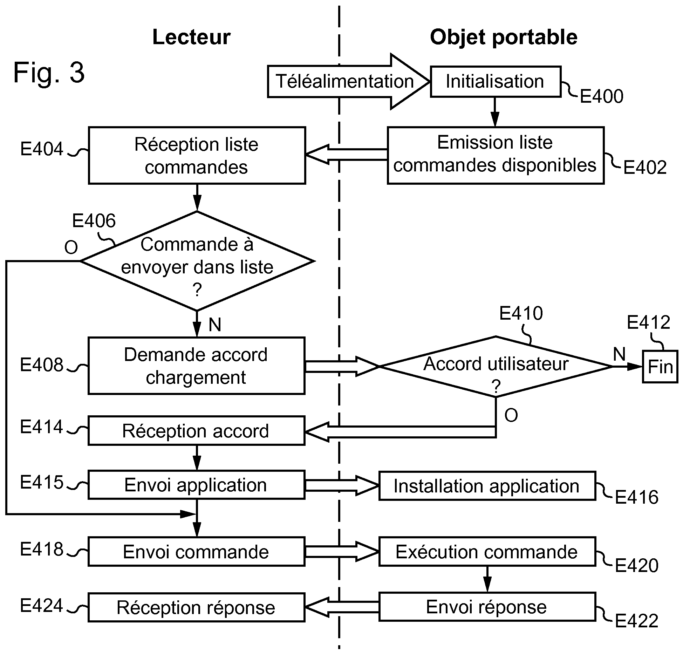

Il est également possible de prévoir de stocker dans cette même table, cette fois en cas d'absence de l'application dans la mémoire, des données utiles pour l'obtention de l'application selon les modes de réalisation décrits ci-après (et à ce titre par exemple l'information que l'application doit être obtenue du lecteur 30 lui-même comme prévu dans le présent mode de réalisation, ou les coordonnées du serveur 50 - par exemple un numéro utilisable par le système de téléphonie cellulaire ou une adresse http - en vue d'un téléchargement comme prévu dans le second mode de réalisation décrit plus loin en référence à la figure 3).

Dans l'affirmative, le microprocesseur exécute l'application afin de mettre en oeuvre la commande comme décrit plus loin à l'étape E236.

Dans la négative, le microprocesseur 12 prépare une requête de chargement de l'application, et demande tout d'abord, pour ce faire, au module de carte à microcircuit 22 la signature et le chiffrement de cette requête de chargement (étape E210).

La requête en chargement contient par exemple un descriptif de la commande (tel qu'un numéro de commande) et éventuellement des paramètres tels des éléments descriptifs des caractéristiques techniques du téléphone portable 10, ainsi qu'éventuellement l'adresse http du serveur 50.

Comme déjà indiqué, la requête de chargement est transmise à la carte microcircuit 22 pour signature et chiffrement (étape E212) à l'aide d'une clé mémorisée au sein de la carte à microcircuit et la carte à microcircuit 22 renvoie par conséquent au microprocesseur 12 la requête chiffrée et signée (étape E214).

On peut prévoir que l'émission de la requête et/ou le chiffrement soit conditionnée par la vérification de la présence d'un droit par la carte à microcircuit 22 et/ou par une autorisation (avec authentification éventuelle) de l'utilisateur du téléphone portable 10, par exemple par sélection d'un item au sein d'un menu ou enfoncement d'une touche particulière, ou par saisie et vérification d'un code personnel (de type PIN, notation abrégée couramment utilisée de *"Personal Identification Number"*).

En variante, une telle autorisation peut être demandée à l'utilisateur au moment du chargement ou de l'installation de l'application.

On peut prévoir par ailleurs en variante que les opérations de chiffrement et/ou d'authentification de l'utilisateur soit réalisées par le téléphone portable 10 (en lieu et place de la carte à microcircuit 22).

La requête chiffrée et signée peut alors être transmise à travers la liaison NFC (c'est-à-dire en pratique à travers le module NFC 24) au lecteur 30, qui reçoit ainsi à l'étape E218 la requête chiffrée et signée.

Le lecteur 30 et principalement son module de commande 32 peuvent ainsi vérifier la signature afin de s'assurer de l'identité de l'objet 10 (ou de la carte à microcircuit 22 ou du porteur de l'objet, et ainsi vérifier éventuellement une autorisation de celui-ci à recevoir l'application) et déchiffrer la requête, par exemple au moyen d'une clé associée à la clé privée mémorisée dans la carte à microcircuit 22 de l'objet portable 10.

Après ces opérations, le module de commande 32 du lecteur 30 peut procéder au traitement de la requête déchiffrée et obtient pour ce faire une copie de l'application à transmettre, par exemple par lecture d'un dispositif de mémorisation associé au lecteur 30 (tel qu'un disque dur connecté en local ou intégré au lecteur 30) ou au moyen d'une connexion au serveur 50 déjà mentionné et détenant l'application (auquel cas la connexion entre le lecteur 30 et le serveur 50 sera de préférence sécurisée, en particulier si la liaison lecteur 30-serveur 50 utilise au moins en partie un réseau public tel que le réseau Internet). On remarque que l'on peut envisager en variante dans ce dernier cas que la requête chiffrée et signée soit directement envoyée par le lecteur 30 au serveur 50 et que la vérification de la signature et le déchiffrement soit effectués par le serveur 50.

La copie de l'application obtenue par le lecteur 30 à l'étape E222 est par ailleurs dans le mode de réalisation décrit ici une version chiffrée et signée, par exemple par une clé privée détenue par l'éditeur de l'application.

L'application chiffrée et signée est envoyée à l'étape E224 du lecteur 30 au téléphone portable 10 à travers la liaison NFC et le microprocesseur 12 reçoit donc à l'étape E226 l'application chiffrée et signée à travers le module NFC 24. Comme déjà indiqué, on pourrait prévoir en variante que l'application soit échangée à travers d'autres interfaces du téléphone 10 et du lecteur 30, par exemple des interfaces sans fil haut débit.

Le microprocesseur 12 envoie alors à l'étape E228 la version de l'application reçue au module de carte à microcircuit 22 en vue d'une vérification de la signature et d'un déchiffrement de la version reçue.

Le module de carte à microcircuit 22 procède à l'étape E230 alors à une vérification de la signature (au moyen de la clé publique associée à la clé privée de l'éditeur de l'application et déchiffre la version de l'application reçue du lecteur 30 au moyen d'une clé secrète, les clés précitées étant par exemple obtenues par la carte à microcircuit 22 par connexion à un serveur, par exemple par l'intermédiaire du réseau Internet et mémorisées dans une mémoire, par exemple non volatile, de la carte à microcircuit 22 ou du téléphone portable 10).

Le module de carte à microcircuit 22 renvoie à l'étape E232 l'application déchiffrée (pour le cas naturellement où la signature a bien été vérifiée ; dans la négative, on ne souhaite pas mettre en oeuvre l'application reçue).

Le microprocesseur 12 reçoit ainsi l'application du module de carte à microcircuit 22 et la mémorise en mémoire vive 14 (ou en variante au sein de la carte à microcircuit 22), ce qui permet, avec éventuellement d'autres opérations associées, son installation à l'étape E234.

On peut prévoir en variante d'installer (et donc notamment de mémoriser) l'application dans une mémoire non volatile du téléphone portable. On peut tenir dans ce cas, par exemple au sein du téléphone, une liste des applications ainsi installées avec la date de dernière utilisation de chacune, afin par exemple d'effacer l'application la plus anciennement utilisée lorsque l'espace mémoire alloué est plein et qu'une nouvelle installation est souhaitée.

Le microprocesseur 12 peut ainsi exécuter à l'étape E236 la commande requise par le lecteur 30 par la mise en oeuvre de l'application qui vient d'être reçue selon le processus décrit ci-dessus (réponse *"non"* à l'étape E208) ou déjà mémorisée dans le téléphone portable 10 (réponse *"oui*" à l'étape E208).

Comme déjà indiqué, la commande (ou, selon la variante déjà envisagée plus haut, l'application désignée en tant que paramètre dans la commande) fait partie de la mise en oeuvre d'une fonctionnalité souhaitée par l'utilisateur du téléphone portable et définit par exemple dans ce cadre un certain protocole d'échange entre le lecteur 30 et le téléphone portable 10.

Dans ce contexte, le téléphone portable 10 renvoie une réponse découlant de la mise en oeuvre de la commande (ou de l'application désignée par celle-ci) à destination du lecteur 30 (étape E238), réponse que le lecteur reçoit à l'étape E240.

La figure 3 représente un second exemple de procédé d'échange de données entre les éléments de la figure 1.

Comme dans l'exemple précédent, la communication entre l'objet portable 10 et le lecteur 30 est engagée du fait de la téléalimentation des moyens de communication courte portée de l'objet portable 10 du fait du rapprochement de ce dernier du lecteur 30, ce qui entraîne une initialisation de la communication entre l'objet portable 10 et le lecteur 30 à l'étape E400.

Dans l'exemple décrit ici, l'objet portable émet alors à travers ces moyens de communication courte portée une liste des commandes disponibles au sein de l'objet portable (étape E402). On remarque que l'objet portable 10 émet ici la liste de commandes disponibles sans aucune sollicitation du lecteur 30.

En variante, la liste de commandes disponibles dans l'objet portable 10 pourrait être émise à destination du lecteur 30 seulement sur requête du lecteur 30, par exemple par émission par le lecteur 30 d'une requête demandant une communication de cette liste ou lorsque l'objet portable 10 reçoit toute commande de la part du lecteur 30.

Le lecteur 30 reçoit à l'étape E404 la liste des commandes ou applications disponibles dans l'objet portable 10.

Le lecteur 30 peut alors déterminer par lui-même si une commande ou application destinée à l'objet portable 10 est contenue dans cette liste des commandes disponibles (étape E406), ou si une application nécessaire à l'exécution de la commande est contenue dans cette liste.

Dans l'affirmative, le lecteur 30 pourra envoyer la commande à l'objet portable 10 (étape E418 décrite ci-après).

Dans la négative, le chargement dans l'objet portable 10 de l'application correspondant à la commande souhaitée par le lecteur 30 constitue un préalable à l'envoi de cette commande et le lecteur 30 lance un processus de chargement de l'application comme décrit ci-après à partir de l'étape E408.

On remarque que selon une variante envisageable, la détermination de la disponibilité de la commande dans l'objet portable 10 aurait pu être réalisée par l'émission d'une requête à destination de l'objet portable, la vérification de la présence de l'application associée dans l'objet portable 10 comme dans les précédents modes de réalisation et l'envoi par l'objet portable 10 à destination du lecteur 30 d'une information indiquant la disponibilité ou non de la commande au sein de l'objet portable 10.

Comme déjà indiqué, lorsqu'il est déterminé que le chargement de l'application associée à une commande est nécessaire avant la mise en oeuvre de celle-ci, on procède à l'étape E408 à laquelle le lecteur 30 envoie dans le présent mode de réalisation une demande d'accord d'un tel chargement à l'objet portable 10.

L'objet portable 10 reçoit cette demande d'accord et requiert par exemple l'accord de l'utilisateur (typiquement par affichage d'un message correspondant à l'attention de l'utilisateur et attente d'une réponse de celui-ci au moyen d'un clavier de l'objet portable 10) comme indiqué à l'étape E410.

Si l'utilisateur refuse le chargement (réponse "*non*" à l'étape E410), on met par exemple fin au processus de communication entre le lecteur 30 et l'objet portable 10 puisqu'une commande de l'un à l'autre ne pourra être exécutée (étape E412).

En revanche, si l'utilisateur accepte le chargement (réponse "*oui*" à l'étape E410), par exemple par sélection d'une touche physique ou virtuelle (menu) prédéterminée et/ou par saisie d'un code personnel par l'utilisateur, l'objet portable 10 retourne au lecteur 30 une information indiquant cet accord (étape E414).

On remarque que l'accord demandé à l'utilisateur tel que décrit ci-dessus est un mode possible de réalisation mais que d'autres variantes pourraient être envisagées : l'accord de l'objet portable 10 pourrait notamment être déterminé en fonction d'un paramètre mémorisé dans l'objet portable 10 et indiquant que de tels chargements sont autorisés.

On peut prévoir en variante que l'accord de l'utilisateur soit demandé avant l'installation de l'application, c'est-à-dire immédiatement après l'étape E416 décrite ci-dessous.

Après réception de l'accord pour le chargement à l'étape E414, le lecteur 30 procède à l'envoi de l'application associée à la commande à l'étape E415, application que le lecteur 30 détient au préalable par exemple dans un disque dur local (ou tout autre moyen de stockage, telle que par exemple une mémoire) ou obtient par connexion (éventuellement sécurisée) au serveur distant 50, comme déjà indiqué à propos du premier mode de réalisation.

L'application est alors reçue à l'étape E416 par l'objet portable 10 et installée au sein de celui-ci (c'est-à-dire principalement mémorisée au sein d'une mémoire, typiquement la mémoire 14, de l'objet portable 10).

Une fois l'application envoyée à l'étape E415, et éventuellement après une temporisation (ou en variante à réception d'une confirmation par l'objet 10 de l'installation de l'application), le lecteur peut procéder à l'envoi de la commande souhaitée à l'étape E418.

L'objet portable 10 reçoit la commande à l'étape E420 et exécute celle-ci en utilisant l'application qu'il détient en mémoire (éventuellement du fait de son chargement à l'étape E415 comme décrit ci-dessus).

Le résultat produit par la mise en oeuvre de cette application est envoyé à l'étape E422 sous forme de réponse au lecteur 30, qui reçoit cette information à l'étape E424.

Les exemples qui précèdent ne sont que des modes possibles de mise en oeuvre de l'invention qui ne s'y limite pas. Notamment, on pourrait envisager en variante que le téléphone portable équipé du module NFC fonctionne en tant que lecteur. Par ailleurs, les caractéristiques et variantes des modes de réalisation présentés ci-dessus pourraient être combinées.

## Revendications

1. Procédé d'échange de données entre une première entité électronique (10) et une seconde entité électronique (30), **caractérisé par** les étapes suivantes :
- initiation d'une communication sans fil courte portée entre la première entité électronique (10) et la seconde entité électronique (30) subséquemment à un rapprochement des première et seconde entités électroniques (10, 30) ;
- en conséquence de ladite initiation, vérification de la présence d'une application dans une mémoire de la première entité électronique, l'étape de vérification comprenant les étapes suivantes :
- émission (E402) par la première entité électronique (10) d'une liste d'applications présentes dans une mémoire de la première entité électronique (10) ;
- détermination (E406) par la seconde entité électronique (30) de la présence de ladite application dans ladite liste ;
- lorsque ladite application est absente de la liste, transmission (E415) de ladite application de la seconde entité électronique (30) vers la première entité électronique (10) ;
- mémorisation (E416) de ladite application dans la première entité électronique (10).

2. Procédé d'échange de données selon la revendication 1, dans lequel l'étape d'initiation d'une communication comprend les étapes suivantes :
- téléalimentation de la première entité électronique (10) par la seconde entité électronique (30) ;
- émission d'un message d'établissement de communication de la première entité électronique (10) vers la seconde entité électronique (30).

3. Procédé d'échange de données selon l'une des revendications 1 à 2, comprenant les étapes suivantes mises en oeuvre en conséquence de l'initiation et préalables à la transmission de l'application :
- affichage sur la première entité électronique d'une information signalant la transmission ;
- attente d'une validation (E410) ;
- transmission (E415) de l'application en cas de validation.

4. Procédé d'échange de données selon l'une des revendications 1 à 3, comprenant une étape de préparation par la première entité électronique d'une requête de chargement de ladite application.

5. Procédé d'échange de données selon la revendication 4, dans lequel la mise en oeuvre de l'étape de préparation est conditionnée par la réception d'une autorisation d'un utilisateur.

6. Procédé d'échange de données selon l'une des revendications 1 à 5, comprenant les étapes suivantes :
- exécution (E420) de l'application par la première entité électronique (10) afin de déterminer une réponse ;
- émission (E422) de la réponse par la première entité (10) électronique à destination de la seconde entité électronique (30).

7. Procédé d'échange de données selon la revendication 6, dans lequel la transmission (E415) de l'application et l'émission (E422) de la réponse sont réalisées par communication entre des moyens de communication courte portée équipant respectivement les première et seconde entités électroniques.

8. Procédé d'échange de données selon l'une des revendications 1 à 6, dans lequel la transmission (E415) de l'application est réalisée par communication entre des interfaces sans fil haut débit équipant respectivement les première et seconde entités électroniques.

9. Procédé d'échange de données selon l'une des revendications 1 à 8, dans lequel l'application est relative à la seconde entité électronique.

10. Procédé d'échange de données selon l'une des revendications 1 à 9, dans lequel la première entité électronique est une entité électronique portable.

11. Procédé d'échange de données selon la revendication 4, dans lequel la requête de chargement est une requête signée et chiffrée, obtenue par signature et chiffrement au moyen d'une carte à microcircuit reçue dans la première entité électronique.

12. Procédé d'échange de données selon la revendication 11, dans lequel l'application transmise est chiffrée, le procédé comprenant une étape de déchiffrement de l'application au moyen de la carte à microcircuit.

## Patentansprüche

1. Verfahren zum Datenaustausch zwischen einer ersten elektronischen Einheit (10) und einer zweiten elektronischen Einheit (30), **gekennzeichnet durch** die folgenden Schritte:
- Initiierung einer drahtlosen Kurzstrecken-Kommunikation zwischen der ersten elektronischen Einheit (10) und der zweiten elektronischen Einheit (30) anschließend an eine Annäherung der ersten und zweiten elektronischen Einheit (10, 30);
- als Folge der Initiierung, Verifikation des Vorhandenseins einer Anwendung in einem Speicher der ersten elektronischen Einheit, wobei der Schritt der Verifikation die folgenden Schritte umfasst:
- Ausgeben (E402) einer Liste von in einem Speicher der ersten elektronischen Einheit (10) vorhandenen Anwendungen durch die erste elektronische Einheit (10) ;
- Bestimmen (E406) des Vorhandenseins der Anwendung in der Liste **durch** die zweite elektronische Einheit (30);
- wenn die Anwendung in der Liste fehlt, Senden (E415) der Anwendung von der zweiten elektronischen Einheit (30) an die erste elektronische Einheit (10);
- Speichern (E416) der Anwendung in der ersten elektronischen Einheit (10).

2. Verfahren zum Datenaustausch nach Anspruch 1,
wobei der Schritt der Initiierung einer Kommunikation die folgenden Schritte umfasst:
- Fernspeisung der ersten elektronischen Einheit (10) durch die zweite elektronische Einheit (30);
- Ausgeben einer Nachricht der Herstellung der Kommunikation der ersten elektronischen Einheit (10) an die zweite elektronische Einheit (30).

3. Verfahren zum Datenaustausch nach Anspruch 1 oder 2,
umfassend die folgenden Schritte, die in Folge des Initiierens und vor dem Senden der Anwendung durchgeführt werden:
- Anzeigen einer das Senden meldenden Information auf der ersten elektronischen Einheit;
- Erwarten einer Validierung (E410);
- Senden (E415) der Anwendung bei Validierung.

4. Verfahren zum Datenaustausch nach einem der Ansprüche 1 bis 3,
umfassend einen Schritt der Vorbereitung einer Ladeanforderung der Anwendung durch die erste elektronische Einheit.

5. Verfahren zum Datenaustausch nach Anspruch 4,
wobei die Durchführung des Vorbereitungsschritts durch den Empfang einer Autorisation eines Benutzers bedingt wird.

6. Verfahren zum Datenaustausch nach einem der Ansprüche 1 bis 5,
umfassend die folgenden Schritte:
- Ausführung (E420) der Anwendung durch die erste elektronische Einheit (10), um eine Antwort zu bestimmen;
- Ausgeben (E422) der Antwort durch die erste elektronische Einheit (10) an die zweite elektronische Einheit (30).

7. Verfahren zum Datenaustausch nach Anspruch 6,
wobei das Senden (E415) der Anwendung und das Ausgeben (E422) der Antwort durch Kommunikation zwischen Kurzstreckenkommunikationsmitteln, mit denen die erste bzw. die zweite elektronische Einheit ausgestattet sind, realisiert wird.

8. Verfahren zum Datenaustausch nach einem der Ansprüche 1 bis 6,
wobei das Senden (E415) der Anwendung durch Kommunikation zwischen drahtlosen Hochgeschwindigkeitsschnittstellen, mit denen die erste bzw. die zweite elektronische Einheit ausgestattet sind, realisiert wird.

9. Verfahren zum Datenaustausch nach einem der Ansprüche 1 bis 8,
wobei sich die Anwendung auf die zweite elektronische Einheit bezieht.

10. Verfahren zum Datenaustausch nach einem der Ansprüche 1 bis 9,
wobei die erste elektronische Einheit eine tragbare elektronische Einheit ist.

11. Verfahren zum Datenaustausch nach Anspruch 4,
wobei die Ladeanforderung eine signierte und chiffrierte Anforderung ist, die durch Signatur und Chiffrierung mittels einer Mikroschaltkarte erhalten wird, die in der ersten elektronischen Einheit aufgenommen wird.

12. Verfahren zum Datenaustausch nach Anspruch 11,
wobei die gesendete Anwendung chiffriert ist, wobei das Verfahren einen Schritt des Dechiffrierens der Anwendung mittels der Mikroschaltkarte umfasst.

## Claims

1. Method of exchanging data between a first electronic entity (10) and a second electronic entity (30), **characterized by** the following steps:
- initiating short range wireless communication between the first electronic entity (10) and the second electronic entity (30) subsequently to bringing the first and second electronic entities (10, 30) closer together;
- in consequence of said initiation, verifying the presence of an application in a memory of the first electronic entity, the verification step comprising the following steps:
- the first electronic entity (10) sending (E402) a list of applications present in a memory of the first electronic entity (10);
- the second electronic entity (30) determining (E406) the presence of said application in said list;
- when said application is absent from the list,
transmitting (E415) said application from the second electronic entity (30) to the first electronic entity (10);
- storing (E416) said application in the first electronic entity (10).

2. Method of exchanging data according to Claim 1, wherein said step of initiating communication comprises the following steps:
- remote power feeding of the first electronic entity (10) by the second electronic entity (30);
- sending a communication set-up message from the first electronic entity (10) to the second electronic entity (30).

3. Method of exchanging data according to any one of Claims 1 and 2, comprising the following steps executed in consequence of the initiation and prior to the transmission of the application:
- displaying on the first electronic entity information indicating transmission;
- awaiting validation (E410);
- transmitting (E415) the application in the case of validation.

4. Method of exchanging data according to any of Claims 1 to 3, comprising a step of the first electronic entity preparing a request for loading of said application.

5. Method of exchanging data according to Claim 4, wherein the execution of the preparation step is conditional on receiving authorization of a user.

6. Method of exchanging data according to any of Claims 1 to 5, comprising the following steps:
- the first electronic entity (10) executing (E420) the application in order to determine a response;
- the first electronic entity (10) sending (E422) the response to the second electronic entity (30) .

7. Method of exchanging data according to Claim 6, wherein the transmission (E415) of the application and the sending (E422) of the response are effected by communication between short range communication means respectively equipping the first and second electronic entities.

8. Method of exchanging data according to any of Claims 1 to 6, wherein the transmission (E415) of the application is effected by communication between high throughput wireless interfaces respectively equipping the first and second electronic entities.

9. Method of exchanging data according to any of Claims 1 to 8, wherein the application relates to the second electronic entity.

10. Method of exchanging data according to any of Claims 1 to 9, wherein the first electronic entity is a portable electronic entity.

11. Method of exchanging data according to Claim 4, wherein the loading request is a signed and encrypted request obtained by signing and encryption by means of a microcircuit card received in the first electronic entity.

12. Method of exchanging data according to Claim 11, wherein the transmitted application is encrypted, the method comprising a step of decrypting the application by means of the microcircuit card.
